# EUROPEAN PATENT SPECIFICATION

(11) **EP 1 249 597 B1**
(45) Date of publication and mention of the grant of the patent: **25.08.2004**
(21) Application number: 02008335.8
(22) Date of filing: 11.04.2002
(51) Int. Cl.: F02M 35/16

(54) **Air-intake device for an air-induction system, in particular of an industrial vehicle**
Luftansaugvorrichtung insbesondere für ein Industriefahrzeug
Dispositif d'admission d'air, en particulier pour un vehicule industriel

(30) Priority: 12.04.2001 IT MI20010791
(43) Date of publication of application: 16.10.2002
(73) Proprietor: OFFICINE METALLURGICHE G. CORNAGLIA S.p.A., 10092 Beinasco (IT)
(72) Inventor: Cornaglia Umberto, 10027 Testona (IT); Vitagliani Paolo, 10154 Torino (IT)
(74) Representative: Jorio, Paolo

(56) References cited:
- EP-A- 0 365 892
- EP-A- 0 433 923
- EP-A- 0 541 016
- GB-A- 2 164 302

## Description

The present invention relates to an air-intake device with separation of water for the air-induction system of an internal-combustion engine, in particular for an industrial vehicle, for example a lorry.

From the Italian patent No. 1267442 in the name of the present applicant, there is known an air-intake device of the aforesaid type in which a substantially parallelepipedal casing or body that can be constrained to the bodywork of a vehicle defines, within it, an empty space or cavity (except for a few stiffening elements without aerodynamic functions). The body or casing is equipped throughout its length at the front with a slit-shaped air-intake opening provided with tangential vanes, and at a bottom end with a connector pipe which can be connected to the air-induction system of the engine of the vehicle and which extends in part, projecting, within the aforesaid empty space or cavity. In use, in the event of rain the water that is sucked in together with the air, on account of the aerodynamic effect due to the advance of the vehicle is separated from the air as a result of the motion that the tangential vanes impress on the air/water aerosol and owing to the "surface" effect caused by the side walls of the cavity, against which the air/water aerosol is projected by the vanes. Consequently, the water gathers in a continuous lens on the walls that delimit the inside of the cavity and drops by gravity towards the bottom end of the body or casing, where one or more holes made through a bottom wall of said bottom end enable discharge thereof, whilst the "clean" air is collected by the connector pipe without mixing with the water any further.

The device described is, however, not without drawbacks. In the first place, in conditions of marked aerodynamic turbulence some drops of water may again get mixed with the air, in particular in the proximity of the inlet of the connector pipe. In order to prevent this from happening, it is necessary, as is described in the aforesaid patent, to provide shields between the walls of the casing and the inlet mouth of the connector pipe; however, these shields raise the cost of the air-intake device and render it more complex and problematical to build.

Also known from EP-A-0433923 is a commercial air-intake device that has been derived from the previous one, in which the slit-like opening extends only along a top part of the casing, and inside the cavity there are provided curved longitudinal separating diaphragms which are as long as the entire casing, the said diaphragms, in use, guiding the aerosol in a curved path from the air-intake opening to the connector pipe. In this case, the separating diaphragms prevent an excessive effect of turbulence in the cavity, thus rendering the shields unnecessary in the bottom part of the device in the vicinity of the connector pipe. However, this solution, which represents a technical equivalent of the previous one in as much as the "surface" effect for collection of the water in the separation of the air/water aerosol is here prevalently obtained by means of the curved surfaces of the separating diaphragms instead of by the side walls of the internal cavity of the casing, is, however, not altogether effective and, in any case, entails the use of quite a large amount of material for manufacturing the diaphragms. Since the devices described are moulded in synthetic plastic material, this involves relatively high production costs.

Finally, in both of the solutions described above, it is not possible to exploit completely the effect of deflection of the vanes, in that they are obtained by being moulded integrally with the remainder of the casing, so in effect forming undercuts. As a result, a very marked orientation of the vanes, such as the one that would be necessary to optimize the aerodynamic performance of the device, cannot be obtained, in so far as it would render impossible, or, at the very least, problematical, the ejection of the finished moulded item, which is obtained, notwithstanding the undercuts, as a result of the elastic deformation of the vanes when these have just been moulded, given that the plastic material is still hot and easily deformable.

The purpose of the present invention is therefore to provide an air-intake device which enables effective separation of any water that may be entrained by the air and which is, at the same time, inexpensive and simple to build in that it does not require either additional shields or a lot of plastic material for it to be made by moulding. A further purpose of the invention is to provide an air-intake device of the type specified above that is of reduced overall dimensions and presents a high degree of sturdiness.

Provided, then, in accordance with the present invention is an air-intake device for an air-induction system, in particular of an industrial vehicle, comprising a casing that delimits an internal cavity which occupies substantially the entire space of said casing; a slit-like opening provided with a plurality of guide vanes, the said opening passing through a front side wall of said casing along one first longitudinal portion thereof; a connector pipe, which extends projecting in said cavity, inside a second longitudinal portion of the casing without said slit-like opening, and which is carried at one end of said second longitudinal portion of the casing distant from said slit-like opening, and a plurality of ribs, designed to define respective longitudinal separating diaphragms of said cavity; and characterised as further defined in Claim 1.

In this way, an air-intake device is obtained which, surprisingly, no longer requires protective shields in the proximity of the intake mouth of the connector pipe and which, at the same time, can be formed with a relatively small amount of plastic material, thus also achieving weight saving, the internal cavity of the casing being prevalently empty. In addition, the ribs arranged according to the invention enable stiffening of the structure of the casing, in particular ruling out any risk of implosion.

According to a further characteristic of the present invention, the aforesald guide vanes are moreover made of a single piece with a frame which is obtained as an element that is independent and separate from the casing and which reproduces the shape of the slit-like opening and is set inserted through the said slit-like opening, in mechanical connection with the casing. In this way, the vanes can be formed separate from the casing, so that they can be produced in such a way that they are sharply angled, thereby contributing to a major extent to the aerodynamic efficiency of the device as a whole, without any drawback of a constructional nature.

Further characteristics and advantages of the present invention will emerge clearly from the ensuing description of a non-limiting example of embodiment with reference to the figures of the attached drawings, in which:
- Figure 1 is a three-quarters front perspective view of an air-intake device for a lorry, built according to the present invention;
- Figure 2 is a front view of the device of Figure 1;
- Figure 3 is a side view of the device of Figure 1; and
- Figures 4, 5, and 6 are respective cross-sectional views of the device according to the invention, taken according to the planes of trace IV-IV, V-V and VI-VI of Figure 3.

With reference to the aforesaid figures, number 1 designates, as a whole, an air-intake device for an air-induction system, in particular of an industrial vehicle, which is known and not illustrated for reasons of simplicity.

The device 1 comprises a casing 2 delimiting an internal cavity 3 which substantially constitutes the entire volume of said casing 2; a slit-like opening 4 provided with a plurality of guide vanes 5, the said opening 4 passing through a front side wall 6 of the casing 2 along one first longitudinal portion 7 thereof; and a connector pipe 8, which extends projecting in the cavity 3, inside a second longitudinal portion 9 of the casing 2, which, according to the invention, is without the slit-like opening 4, the latter being limited to regarding only the portion 7 of the casing 2, which is designed, in use, to define the top part of the device 1.

The connector pipe 8 is carried at one end of the longitudinal portion 9 of the casing 2 distant from the slit-like opening 4 and designed, in use, to define the bottom part of the air-intake device 1, the said air-intake device finally comprising a plurality of ribs 10, which are designed to define, according to the invention, respective longitudinal separating diaphragms of the cavity 3.

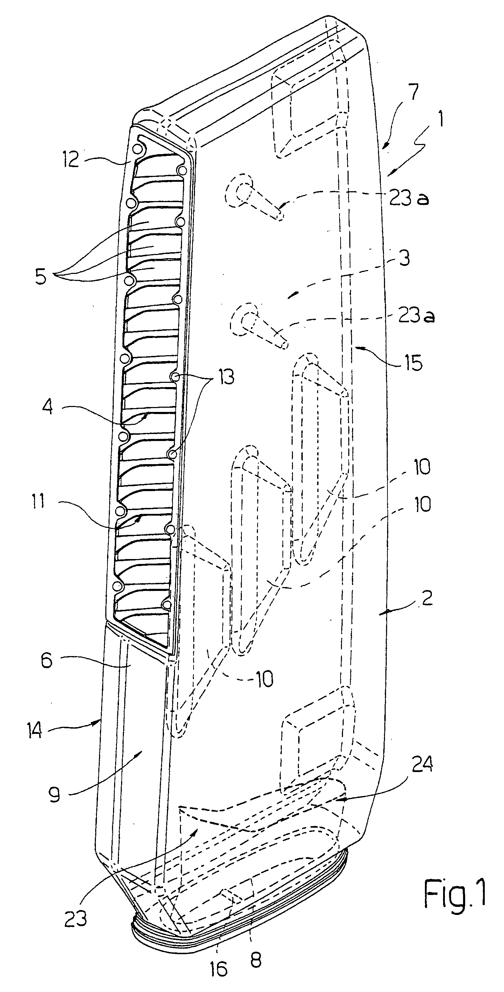

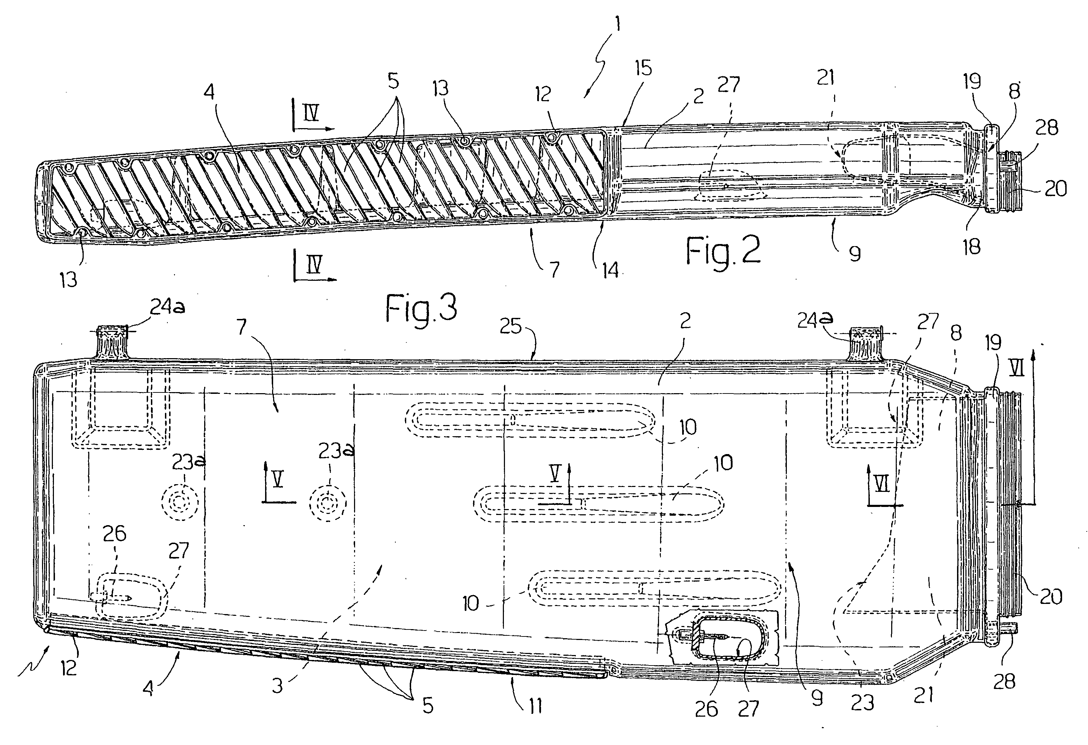

According to the present invention, the ribs 10 are substantially rectilinear and are arranged in the cavity 3 parallel to the longitudinal axis of symmetry of the connector pipe 8. The ribs 10 are moreover shaped in such a way that each occupies, inside the cavity 3, only part of the longitudinal portion 7 (in use, the top one) and only part of the longitudinal portion 8 (in use, the bottom one) of the casing 2, in such a way that the separating diaphragms defined thereby have a length that is shorter than the length of the casing 2 (Figures 1 and 2) and are set facing the slit-like opening 4 only for a limited stretch 11 thereof adjacent to the portion 9 of the casing 2, and hence turned towards the connector pipe 8.

In particular, the ribs 10 are set axially staggered with respect to one another in a direction parallel to the axis of symmetry of the connector pipe 8, so that they progressively depart from the mouth of the latter, the further they are set from the slit-like opening 4. In this way, each rib 10 faces a stretch 11, the width of which is greater than the width of the slit-like opening 4, the further the rib 10 in question is from the wall 6.

According to a further characteristic of the present invention, the guide vanes 5 are moreover made of a single piece with a frame 12 obtained as an element that is independent and separate from the casing 2, the said frame 12 reproducing the shape of the slit-like opening 4 and being set inserted through the latter by mechanical connection with the casing 2, this being expedient in as much as both the frame 12 and the casing 2 are obtained by moulding of synthetic plastic materials and are thus more easily manufactured separately.

The frame 12 and the casing 2 are in any case fitted together in an integral way by means of respective mechanical connecting means consisting, for example, of rivets 13, and the vanes 5 are obtained crosswise to the frame 12 as internal cross members of the latter so as to bestow thereon the necessary stiffness.

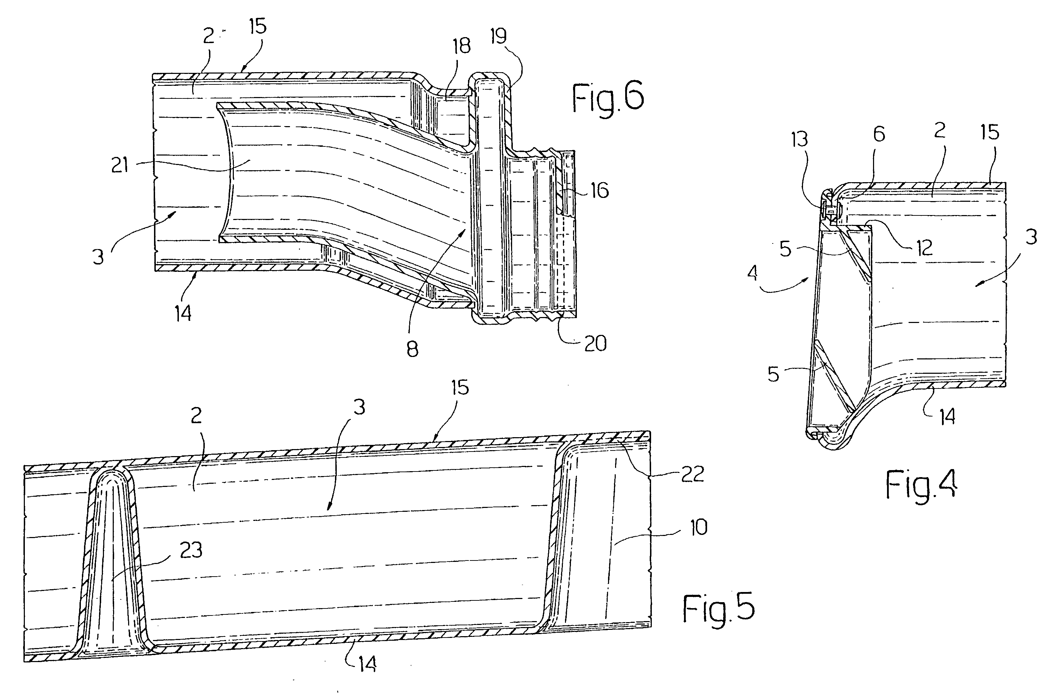

In the preferred embodiment illustrated herein, the casing 2 has a basically parallelepipedal shape and is delimited, on the opposed sides of the slit-like opening 4, by respective walls, an intrados wall 14 and an extrados wall 15, which are substantially cylindrical and have an axis of symmetry that is substantially perpendicular to the axis of symmetry of the connector pipe 8 (Figure 2). The connector pipe 8 has a substantially oval cross section (Figure 1) and is stiffened by a middle cross member 16 (Figures 1 and 6).

The connector pipe 8 is made as an element independent of the casing 2 and is fixed integrally thereto by means of an open foot 18 of the bottom end of the portion 9. In particular, the connector pipe 8 comprises: a collar 19, which is set outside and bears upon the open foot 18 in order to close the latter; a first stretch 20 of pipe, which extends projecting from the collar 19 and is set eccentrically on the latter, being displaced on the side where the wall 14 is present; and a second stretch 21 of pipe, which extends projecting from the collar 19 inside the casing 2, the said second stretch 21 being substantially S-shaped in longitudinal cross section (Figure 6) so as to come, with its own inlet mouth, into the proximity of the wall 15.

The ribs 10 are formed as embossings which are made in the intrados wall 14 and extend inside the cavity 3 throughout the height thereof, right up to the extrados wall 15. Respective crests 22 of the ribs 10 are obtained of a single piece with the wall 15 in such a way as to constitute localized thickenings thereof. In particular, the device 1 includes three ribs 10 which are set substantially in front of the inlet mouth of the connector pipe 8, two of the said ribs 10 being set one at the end edge 23 and the other at the end edge 24, whilst the third rib 10 is set at the middle, approximately in a position corresponding to the cross member 16 of said inlet mouth. Furthermore, the casing 2 is provided, in a position corresponding to its portion 7, with at least one stiffening stem 23a (of the two stiffening stems appearing in the configuration illustrated) obtained as an embossing of the intrados wall 10 up to the point where it is integrated with the extrados wall 15, the said stiffening stem 23a being substantially aligned with said rib 10 set at the middle of the inlet mouth of the connector pipe 8. Furthermore, the edge 23 close to the slit-like opening 4 is asymmetrical with respect to the edge 24, and in particular extends so that it projects further from the collar 19 and towards the slit-like opening 4 than does the edge 24.

Finally, in order to ensure its assembly in use, the casing 2 is provided with corresponding attachment means comprising at least one pair of rings 24a made on the outside on a rear wall 25 of the casing opposite to the opening 4, and at least one pair of metal hinges 26 that are co-moulded integral with the casing 2 inside respective external recesses 27 of the intrados wall 14, the said recesses 27 being formed in the proximity of the slit-like opening 4.

During use of the device according to the invention, the air/water aerosol sucked through the opening 4 is directed by the vanes 5, which can be made so that they present different angles towards the walls 14, 25, 15, where the water forms a continuous lens that drops by gravity towards the portion 9. Since the latter does not have the opening 4, even in conditions of strong turbulence such turbulence cannot disturb the cavity part 3 where the inlet mouth of the connector pipe 8 projects. Any turbulence close to the stretch 11 of the opening 4 is, instead, intercepted by the ribs 10, with the result that there is no need of shields for protecting the connector pipe 8, and this, surprisingly enough, notwithstanding the fact that the ribs 10 have a rather limited length as compared to the overall length of the casing 2. The intercepted water collects, in a known way, inside the foot 18, from where it is discharged through one or more discharge points 28 (Figures 2 and 3).

## Claims

1. An air-intake device (1) for an induction system, in particular of an industrial vehicle, comprising a casing (2) delimiting an internal cavity (3) substantially occupying the entire volume of said casing (2); a slit-like opening (4) provided with a plurality of guide vanes (5), the said opening (4) passing through a front side wall (6) of said casing along one first longitudinal portion (7) thereof; a connector pipe (8), which extends projecting in said cavity (3), inside a second longitudinal portion (9) of the casing (2) without said slit-like opening, and which is carried at one end of said second longitudinal portion (9) of the casing (2) distant from said slit-like opening (4); and a plurality of ribs (10), designed to define respective longitudinal separating diaphragms of said cavity (3) and arranged in such a way that each occupies only part of said first longitudinal portion (7) and only part of said second longitudinal portion (9) of the casing (2), so that the separating diaphragms defined by said ribs (10) have a length smaller than that of the casing (2); **characterized in that** said ribs (10) are substantially rectilinear and are set in said cavity (3) parallel to said connector pipe (8) and facing said slit-like opening (4) only for a limited stretch (11) thereof adjacent to said second longitudinal portion (9) of the casing (2) and hence turned towards said connector pipe (8); said device (1) comprising three of said ribs set substantially in front of the inlet mouth of said connector pipe (8), two of said ribs (10) being set one at one end edge and the other at the other end edge of said inlet mouth, and the third being set at the middle of said inlet mouth.

2. The air-intake device according to Claim 1, **characterized in that** said guide vanes (5) are made of a single piece with a frame (12), which is formed as an element independent and separate from said casing (2) and which reproduces the shape of said slit-like opening (4) and is set inserted through the latter, in mechanical connection with said casing (2).

3. The air-intake device according to Claim 2, **characterized in that** said frame (12) and said casing (2) are obtained by molding from synthetic plastic materials and are integrally fixed together by means of respective mechanical-connection means (13), said vanes (5) being made crosswise with respect to the frame (12), inside the latter.

4. The air-intake device according to any one of the foregoing claims, **characterized in that** said casing (2) has a substantially parallelepipedal shape and is delimited, on the opposed sides of said slit-like opening, by respective walls, an intrados wall (14) and an extrados wall (15), which are substantially cylindrical and have an axis of symmetry substantially perpendicular to the axis of symmetry of said connector pipe (8), which has a substantially oval cross section.

5. The air-intake device according to Claim 4, **characterized in that** said connector pipe (8) is made as an element independent of said casing (2) and is integrally fixed to the latter by means of an open foot (18) of said bottom end of said second casing portion (9); said connector pipe (8) comprising: a collar (19) set outside and bearing upon said open foot (18) of the casing in order to close the latter, a first stretch (20) of pipe, which extends projecting from the collar (19) and is set eccentrically thereon, being displaced on the side where said cylindrical intrados wall (14) of the casing is present; and a second stretch (21) of pipe, which extends projecting from the collar (19) inside the casing (2), the said second stretch (21) being substantially S-shaped in longitudinal cross section so as to come, with its own inlet mouth, into the proximity of said cylindrical extrados wall (15).

6. The air-intake device according to Claim 4 or Claim 5, **characterized in that** said ribs (10) are formed as embossings which are made in said intrados wall (14) and extend inside said cavity as far as up against the extrados wall (15), respective crests of said ribs being obtained of a single piece with the extrados wall (15) in such a way as to constitute localized thickenings thereof.

7. The air-intake device according to Claim 6, **characterized in that**; said casing (2) is provided, in a position corresponding to said first portion (7), with at least one stiffening stem (23a) obtained as an embossing of the intrados wall (14) up to the point where it is integrated with the extrados wall (15), the said stiffening stem (23a) being substantially aligned with said rib (10) set at the middle of the inlet mouth of said connector pipe (8).

8. The air-intake device according to Claim 6 or Claim 7, **characterized in that** said ribs (10) are set axially staggered with respect to one another, in such a way that they progressively depart from said connector pipe (8), the further they are set from said slit-like opening (4), so that they face progressively wider stretches (11) of said slit-like opening (4).

9. The air-intake device according to any one of Claims 4 to 8, **characterized in that** said casing (2) is provided with corresponding attachment means (24a,26) comprising at least one pair of rings (24a) made on the outside on a rear wall (25) of the casing (2) opposite to said slit-like opening (4), and at least one pair of metal hinges (26) that are co-molded integral with the casing (2) inside respective external recesses (27) of the intrados wall (14), said recesses (27) being formed in the proximity of said slit-like opening (4).

## Patentansprüche

1. Lufteinlasseinrichtung (1) für ein Ansaugsystem, insbesondere eines Industriefahrzeugs, enthaltend:
ein Gehäuse (2), das eine interne Aushöhlung (3) begrenzt, die im Wesentlichen das gesamte Volumen des Gehäuses (2) einnimmt;
eine schlitzartige Öffnung (4), die mit mehreren Leitschaufeln (5) versehen ist, wobei die Öffnung (4) durch eine vordere Seitenwand (6) des Gehäuses entlang eines ersten Längsbereichs (7) des Gehäuses führt;
ein Anschlussrohr (8), das sich in die Aushöhlung (3) hinein erstreckend vorspringt, im Inneren eines zweiten Längsbereichs (9) des Gehäuses ohne die schlitzartige Öffnung, und das an einem Ende des zweiten Längsbereichs (9) des Gehäuses (2) in einem Abstand zu der schlitzartigen Öffnung (4) gestützt ist; und
mehrere Rippen (10), die dazu gestaltet sind, jeweilige längsverlaufende Trennlamellen der Aushöhlung (3) zu definieren, und die derart angeordnet sind, dass jede Rippe nur einen Teil des ersten Längsbereichs (7) und nur einen Teil des zweiten Längsbereichs (9) des Gehäuses (2) besetzt, so dass die Trennlamellen, die durch die Rippen (10) definiert werden, eine Länge aufweisen, die kürzer als diejenige des Gehäuses (2) ist;
**dadurch gekennzeichnet, dass**
die Rippen (10) im Wesentlichen geradlinig sind und in die Aushöhlung (3) parallel zu dem Anschlussrohr (8) eingesetzt sind und der schlitzartigen Öffnung (4) nur über eine begrenzte Ausdehnung (11) von ihr angrenzend an den zweiten Längsbereich (9) des Gehäuses (2) gegenüberstehen und damit in Richtung auf das Anschlussrohr (8) gedreht sind;
die Einrichtung (1) drei der Rippen enthält, die im Wesentlichen vor der Einlassöffnung des Anschlussrohrs (8) liegen, wobei zwei der Rippen (10) derart festgelegt sind, dass eine an einem Endrand und die andere am anderen Endrand der Einlassöffnung liegt, und wobei die dritte in der Mitte der Einlassöffnung festgelegt ist.

2. Lufteinlasseinrichtung nach Anspruch 1,
**dadurch gekennzeichnet, dass**
die Leitschaufeln (5) aus einem einzigen Stück mit einem Rahmen (12) gefertigt sind, der als ein Bauteil gebildet ist, das von dem Gehäuse (2) unabhängig und getrennt ist, und der die Gestalt der schlitzartigen Öffnung (4) reproduziert und eingesetzt durch diese in mechanischer Verbindung mit dem Gehäuse (2) festgelegt ist.

3. Lufteinlasseinrichtung nach Anspruch 2,
**dadurch gekennzeichnet, dass**
der Rahmen (12) und das Gehäuse (2) durch Formen von synthetischen Kunststoffmaterialien erhalten werden und miteinander fest verbunden durch jeweilige mechanische Verbindungsmittel (13) befestigt werden, wobei die Schaufeln (5) quer verlaufend im Bezug auf den Rahmen (12) im Inneren des Rahmens gefertigt sind.

4. Lufteinlasseinrichtung nach einem der vorhergehenden Ansprüche,
**dadurch gekennzeichnet, dass**
das Gehäuse (2) eine im Wesentlichen quaderförmige Gestalt aufweist und auf den einander entgegengesetzten Seiten der schlitzartigen Öffnung durch jeweilige Wände begrenzt ist, eine innere Bogenflächenwand (14) und eine äußere Bogenflächenwand (15), die im Wesentlichen zylindrisch sind und eine Symmetrieachse aufweisen, die im Wesentlichen senkrecht zur Symmetrieachse des Verbindungsrohrs (8) ist, das einen im Wesentlichen ovalen Querschnitt aufweist.

5. Lufteinlasseinrichtung nach Anspruch 4,
**dadurch gekennzeichnet, dass**
das Verbindungsrohr (8) als ein von dem Gehäuse (2) unabhängiges Element gefertigt ist und fest verbunden mit diesem durch einen offenen Fuß (18) des Bodenendes des zweiten Gehäusebereichs (9) befestigt ist;
das Verbindungsrohr (8) enthält:
einen Bund (19), der außerhalb des offenen Fußes (18) des Gehäuses festgelegt ist und darauf lagert, um das Gehäuse zu schließen;
eine erste Ausdehnung (20) des Rohrs, die sich vorspringend von dem Bund (19) erstreckt und exzentrisch darauf festgelegt ist, wobei sie auf die Seite versetzt ist, auf der die zylindrische innere Bogenflächenwand (14) des Gehäuses vorhanden ist;
und eine zweite Ausdehnung (21) des Rohrs, die sich vorspringend von dem Kragen (19) im Inneren des Gehäuses (2) erstreckt, wobei die zweite Ausdehnung (21) im Längsquerschnitt im Wesentlichen S-förmig ist, so dass sie mit ihrer eigenen Einlassöffnung in die Umgebung der zylindrischen äußeren Bogenflächenwand (15) gelangt.

6. Lufteinlasseinrichtung nach Anspruch 4 oder 5,
**dadurch gekennzeichnet, dass**
die Rippen (10) als Prägungen gebildet sind, die in die innere Bogenflächenwand (14) eingebracht sind und sich im Inneren der Aushöhlung bis zur äußeren Bogenflächenwand (15) erstrecken, wobei jeweilige Kämme der Rippen aus einem einzigen Stück mit der äußeren Bogenflächenwand (15) derart erhalten werden, dass sie örtlich begrenzte Verdickungen davon bilden.

7. Lufteinlasseinrichtung nach Anspruch 6,
**dadurch gekennzeichnet, dass**
das Gehäuse (2) in einer Position entsprechend dem ersten Bereich (7) mit zumindest einem versteifenden Schaft (23a) versehen ist, der als Prägung der inneren Bogenflächenwand (14) erhalten wird, bis zu dem Punkt, an dem er mit der äußeren Bogenflächenwand (15) fest verbunden ist, wobei der versteifende Schaft (23a) im Wesentlichen mit der Rippe (10) ausgerichtet ist, die in der Mitte der Einlassöffnung des Verbindungsrohrs (8) festgelegt ist.

8. Lufteinlasseinrichtung nach Anspruch 6 oder 7,
**dadurch gekennzeichnet, dass**
die Rippen (10) axial gestaffelt im Bezug aufeinander derart festgelegt sind, dass sie fortschreitend weiter von dem Verbindungsrohr (8) entfernt sind, je weiter sie von der schlitzartigen Öffnung (4) festgelegt sind, so dass sie fortschreitend breiteren Ausdehnungen (11) der schlitzartigen Öffnung (4) gegenüberliegen.

9. Lufteinlasseinrichtung nach einem der Ansprüche 4 bis 8,
**dadurch gekennzeichnet, dass**
das Gehäuse (2) mit einem entsprechendem Befestigungsmittel (24a, 26) versehen ist, das zumindest ein Paar von Ringen (24a), die auf der Außenseite auf einer Rückwand (25) des Gehäuses (2) gegenüber der schlitzartigen Öffnung (4) gefertigt sind, und zumindest ein Paar von Metallgelenken (26) enthält, die fest verbunden mit dem Gehäuse (2) im Inneren von jeweiligen externen Ausnehmungen (27) der inneren Bogenflächenwand (14) geformt sind, wobei die Ausnehmungen (27) in der Umgebung der schlitzartigen Öffnung (4) gebildet sind.

## Revendications

1. Dispositif d'admission d'air (1) pour système à induction, en particulier d'un véhicule industriel, comprenant un carter (2) délimitant une cavité interne (3) occupant sensiblement tout le volume dudit carter (2), une ouverture analogue à une fente pourvue d'une pluralité d'aubes de guidage (5), ladite ouverture (4) traversant une paroi avant (6) dudit carter le long d'une première partie longitudinale (7) de celui-ci ; un tuyau de raccordement (8) qui s'étend en faisant saillie dans ladite cavité (3), à l'intérieur d'une seconde partie longitudinale (9) du carter (2) sans ladite ouverture analogue à une fente, et qui est supporté à une extrémité de ladite seconde partie longitudinale (9) du carter (2) distante de ladite ouverture analogue à une fente (4) ; et une pluralité de nervures (10), conçues pour définir des diaphragmes longitudinaux de séparation respectifs de ladite cavité (3) et conçus de façon que chacun occupe seulement une partie de ladite première partie longitudinale (7) et une partie de ladite seconde partie longitudinale (9) du carter (2), de telle sorte que les diaphragmes de séparation définis par lesdites nervures (10) ont une longueur inférieure à celle du carter (2) ; **caractérisé en ce que** lesdites nervures (10) sont sensiblement rectilignes et sont disposées, dans ladite cavité (3), parallèlement audit tuyau de raccordement (8) et en regard de ladite ouverture analogue à une fente (4) seulement sur une portion limitée de celle-ci au voisinage immédiat de ladite seconde partie longitudinale (9) du carter (2) et donc orientées vers ledit tuyau de raccordement (8) ; ledit dispositif (1) comportant trois dites nervures disposées sensiblement en face de l'embouchure d'entrée dudit tuyau de raccordement (8), deux desdites nervures (10) étant disposées, une première sur un premier bord d'extrémité et l'autre sur l'autre bord d'extrémité de ladite embouchure d'entrée, et la troisième étant disposée au milieu de ladite embouchure d'entrée.

2. Dispositif d'admission d'air selon la revendication 1, **caractérisé en ce que** lesdites aubes de guidage (5) font corps avec un cadre (12), qui constitue un élément indépendant et séparé dudit carter (2) et qui reproduit la forme de ladite ouverture analogue à une fente (4) et qui est inséré à travers cette dernière, en étant lié mécaniquement avec ledit carter (2).

3. Dispositif d'admission d'air selon la revendication 2, **caractérisé en ce que** ledit cadre (12) et ledit carter (2) sont réalisés par moulage de matières plastiques synthétiques et sont fixés solidairement l'un à l'autre à l'aide de moyens de liaison mécanique respectifs (13), lesdites aubes (5) étant placées transversalement par rapport au cadre (12), à l'intérieur de ce dernier.

4. Dispositif d'admission d'air selon l'une quelconque des revendications précédentes, **caractérisé en ce que** ledit carter (2) a une forme sensiblement parallélépipédique et est délimité, sur les côtés opposés de ladite ouverture analogue à une fente, par des parois respectives, une paroi d'intrados (14) et une paroi d'extrados (15), qui sont sensiblement cylindriques et ont un axe de symétrie sensiblement perpendiculaire à l'axe de symétrie dudit tuyau de raccordement (8), qui a une section transversale sensiblement ovale.

5. Dispositif d'admission d'air selon la revendication 4, **caractérisé en ce que** ledit tuyau de raccordement (8) constitue un élément indépendant dudit carter (2) et fait corps avec ce dernier à l'aide d'un pied ouvert (18) de ladite extrémité inférieure de ladite seconde partie (9) de carter ; ledit tuyau de raccordement (8) comprenant : un collier (19) disposé à l'extérieur et reposant sur ledit pied ouvert (18) du carter afin de fermer ce dernier ; une première portion (20) de tuyau, qui s'étend en faisant saillie depuis le collier (19) et est disposée de manière excentrée sur celui-ci, étant décalée du côté où ladite paroi d'intrados cylindrique (14) du carter est présente ; et une seconde portion (21) de tuyau, qui s'étend en faisant saillie depuis le collier (19) à l'intérieur du carter (2), ladite seconde portion (21) ayant une section longitudinale sensiblement en S de manière à venir, par sa propre embouchure d'entrée, à proximité de ladite paroi d'extrados cylindrique (15).

6. Dispositif d'admission d'air selon la revendication 4 ou la revendication 5, **caractérisé en ce que** lesdites nervures (10) sont formées par gaufrage dans ladite paroi d'intrados (14) et s'étendent à l'intérieur de ladite cavité jusqu'à venir contre la paroi d'extrados (15), les crêtes respectives desdites nervures étant réalisées d'une seule pièce avec la paroi d'extrados (15) de manière à constituer des épaississements localisés de celle-ci.

7. Dispositif d'admission d'air selon la revendication 6, **caractérisé en ce que** ledit carter (2) est pourvu, à un emplacement correspondant à ladite première partie (7), d'au moins une tige de raidissement (23a) réalisée par gaufrage dans la paroi d'intrados (14) jusqu'au point où elle se fond dans la paroi d'extrados (15), ladite tige de raidissement (23a) étant sensiblement alignée avec ladite nervure (10) disposée au milieu de l'embouchure d'entrée dudit tuyau de raccordement (8).

8. Dispositif d'admission d'air selon la revendication 6 ou la revendication 7, **caractérisé en ce que** lesdites nervures (10) sont disposées de manière axialement décalée les unes par rapport aux autres, de façon à s'écarter progressivement dudit tuyau de raccordement (8), à mesure qu'elles sont disposées de plus en plus loin de ladite ouverture analogue à une fente (4), afin qu'elles soient progressivement en regard de portions plus larges (11) de ladite ouverture analogue à une fente (4).

9. Dispositif d'admission d'air selon l'une quelconque des revendications 4 à 8, **caractérisé en ce que** ledit carter (2) est pourvu de moyens de fixation correspondants (24a, 26) comportant au moins une paire de bagues (24a) présentes à l'extérieur sur une paroi arrière (25) du carter (2) opposée à ladite ouverture analogue à une fente (4), et au moins une paire de charnières métalliques (26) qui sont moulées d'une seule pièce avec le carter (2) à l'intérieur d'évidements extérieurs respectifs (27) de la paroi d'intrados (14), lesdits évidements (27) étant formés à proximité de ladite ouverture analogue à une fente (4).
